# EUROPEAN PATENT SPECIFICATION

(11) **EP 3 799 772 B1**
(45) Date of publication and mention of the grant of the patent: **12.02.2025**
(21) Application number: 18932567.3
(22) Date of filing: 14.11.2018
(51) Int. Cl.: F24C 15/16

(54) **OVEN SLIDE RAIL ASSEMBLING AND DISASSEMBLING MECHANISM HAVING LOCKING FUNCTION**
MECHANISMUS ZUR MONTAGE UND DEMONTAGE EINER BACKOFENGLEITSCHIENE MIT VERRIEGELUNGSFUNKTION
MÉCANISME D'ASSEMBLAGE ET DE DÉSASSEMBLAGE DE RAIL DE COULISSEMENT DE FOUR AYANT UNE FONCTION DE VERROUILLAGE

(30) Priority: 03.09.2018 CN 201811020576
(43) Date of publication of application: 07.04.2021
(73) Proprietor: Jiangsu Sarcah Group Co., Ltd., Taizhou City, Jiangsu 225300 (CN)
(72) Inventor: HU, Tao, Shenzhen, Guangdong 518000 (CN); SUN, Jian, Kunshan, Jiangsu 215300 (CN); YANG, Wenming, Singapore 689105 (SG)
(74) Representative: Lin Chien, Mon-Yin
(86) International application number: PCT/CN2018/115364
(87) International publication number: WO 2020/048000

(56) References cited:
- EP-A1- 3 006 833
- CN-A- 107 485 303
- CN-A- 108 371 490
- CN-A- 108 371 490
- CN-U- 202 751 233
- CN-U- 205 585 869
- JP-A- 2009 079 831
- JP-A- 2017 099 956
- TW-U- M 386 031
- US-A1- 2011 123 260
- US-A1- 2012 145 856
- US-A1- 2013 156 353

## Description

### Technical Field

The present invention relates to the field of slide rails, particularly to an oven slide rail handling mechanism with a locking function.

### Background

An oven, after being used, still has a high temperature. It is not only inconvenient to operate but also is easy to cause a scalding accident when taking out food from or placing food in the oven having such high temperature, having a potential safety hazard.

Therefore, an oven liner is now equipped with a slide rail and a connecting frame, the connecting frame is fixed to inner walls of both sides of an oven, a lower rail of the slide rail is fixedly mounted on the connecting frame, and a baking tray placed in the oven is fastened on an upper rail of the slide rail, so that the baking tray slides with respect to the connecting frame. The structure is simple, and the use is convenient and safe.

However, because the slide rail takes up considerable space of the oven liner, the slide rail is equipped with a holding component facilitating assembly or disassembly in general. An existing holding component includes a horizontal holding part and a vertical holding part, the horizontal holding part and the vertical holding part being held on a transverse rod and a vertical rod respectively.

Although the holding component of the above structure can be tightly held, it is difficult to disassemble the holding component after holding, and is easy to damage the holding component during disassembly.

In view of the above problem, though there is a removable slide rail mounted on left and right grids of an embedded oven in the market, the slide rail including an outer rail of a guide rail and an inner rail of the guide rail which are assembled together by a rolling mechanism, a plurality of hooks being arranged on both sides of the inner rail of the guide rail, the slide rail being hooked on the grids of the oven by the hooks, because the slide rail of the structure is arranged on the racks of the oven by the plurality of hooks, the support area is small, the structural performance is not reliable, being easy to cause the slide rail to come off, affecting the normal use of the oven.

US 2012/145856 A1 disclosed a guide rail configured to be mounted on bars of a grid side part of a household appliance or furniture. The bars run horizontally and are bent at an angle in bent end regions. The guide rail includes a quick fastening device including two mounting elements attached in end regions of the guide rail and configured to be detachably fixed to the bars of the grid side part. A first mounting section partially encloses one of the bars in a longitudinally extending region of the bar. A second mounting section partially encloses the bar at one of the bent regions of the bar. One of the mounting sections faces a rear bent end region and is open in a direction towards a rear of the guide rail. A resilient catch lug extends upward from the leg and engages behind the bar that is enclosed by the mounting elements.

US 2013/156353 A1 disclosed a connecting device for fixing a pull-out guide to a side grate, in particular for baking ovens, comprising a holder, which has at least one hook for engaging with a horizontal brace of the side grate, and a spring element, by means of which the holder can be latched to the side grate, wherein the spring element is designed as a separate component and has a flexible spring leg for latching the holder.

US 2011/123260 A1 disclosed a quick-action fastening element serves for fastening a guide rail to a rod of a grid-like side part, in particular for baking ovens, wherein the rod has an end portion which is bent at an angle relative to the longitudinal direction, and the quick-action fastening element engages with a first clip at least partially around a portion of the rod arranged in the longitudinal direction and engages with a second clip at least partially around the bent end portion, wherein a resilient latching element is provided which engages behind the rod, wherein the quick-action fastening element has provided on it a stop for limiting the pivoting travel of the latching element.

CN 108 371 490 A disclosed a tool-free quick loading and unloading oven slide rail mounting combined device, which includes a side frame adaptively mounted in the oven. The side frame is provided with a rail body on which an ovenware is adaptively mounted. The rail body is provided with a mounting combined clamping piece for tool-free quick mounting on the side frame. The mounting combined clamping piece comprises a front clamping piece with a front clamping position, a rear clamping piece with an arc elastic clamping position. The arc elastic clamping piece is clamped on the back end of the crossrod and the arc elastic clamping piece acts elastically on the rail body so that the front clamping position of the front clamping piece is clamped on the front end of the cross rod of the side frame

EP 3 006 833 A1 disclosed a device for moving a push element is proposed, which can be arranged movable by means of the device on a side wall portion movably, wherein the device comprises a support rail to the sidewall portion and comprises cooperating with the thrust member, which relative to the carrier rail is displaceable, and wherein the carrier rail is releasably attachable to a rod assembly at the side wall portion over holding means which are matched to the rod assembly. According to the invention, the holding means are designed such that the holding means are applied to a horizontally aligned rod portion of the rod assembly, wherein the holding means additionally applied to a vertically aligned rod portion of the rod assembly via a partial circumference of the vertically aligned rod portion so that the device for motion guide is fixable on the rod assembly.

### Summary

An object of the present invention is to overcome the defect in the prior art and provide an oven slide rail handling mechanism with a locking function. The mechanism has a good holding effect and reliable structural performance, is able to quickly assemble or disassemble a slide rail, is convenient to operate, facilitates maintenance and replacement, guarantees the use effect of the slide rail, and ensures the normal use of the oven.

The object of the present invention is realized by following technical solution: an oven slide rail handling mechanism with a locking function, comprising a connecting frame mounted on inner walls of both sides of an oven body, and a rail body, wherein an upper rail of the rail body is fitted to a baking tray, and a lower rail of the rail body is provided with a connecting component. The connecting component includes a guide snap for slipping on a transverse rod of the connecting frame in the same horizontal direction as the upper rail, and a front holder, wherein the front holder and the guide snap are respectively mounted at a front end and a rear end of a bottom surface of the lower rail, the guide snap is provided with a snap-fitting position for snap-fitting in a corner position at a rear end of the transverse rod, and the front holder is provided with a latch rod locked in a corner position at a front end of the transverse rod.

According to the invention, the front holder comprises a U-shaped holding block slipping in the same horizontal direction as the guide snap, an upper end of the U-shaped holding block is provided with a latch fastener position, a low end of the U-shaped holding block is provided with an open fastener position and a connecting fastener position, the latch rod is provided with a toggle latch block, an inner-side limiting fastener block and a corner limiting fastener block, the toggle latch block is adaptively fastened or separated in the latch fastener position, and the inner-side limiting fastener block and the corner limiting fastener block are fastened or separated in the open fastener position and the connecting fastener position respectively under the driving of the toggle latch block.

According to above optimization, a middle part of the U-shaped holding block is provided with a U-shaped guide groove with an opening provided toward an inner side of the transverse rod, the U-shaped guide groove is in sliding connection with the transverse rod, a front end of the U-shaped guide groove is provided with a limit stop connected with an appropriate end of the corner position of the transverse rod, and the latch fastener position is provided between the connection of the limit stop and the upper end of the U-shaped holding block.

According to above optimization, holding positions held at a straight bar part of the transverse rod and the corner position are formed by the inner-side limiting fastener block and the corner limiting fastener block which are fastened in the open fastener position and the connecting fastener position and the U-shaped guide groove.

According to above optimization, the upper end of the U-shaped holding block is provided with a limiting fastener hole corresponding to the inner-side limiting fastener block, and the inner-side limiting fastener block is buckled on the limiting fastener hole while being fastened in the open fastener position.

According to above optimization, a positioning end of the latch rod is connected to a rear end of the front holder in a positioning mode, a swing end of the latch rod is swung up and down by taking the positioning end thereof as a fixed point, and the swing end of the latch rod is outward folded to form the inner-side limiting fastener block, the corner limiting fastener block and the toggle latch block respectively.

According to above optimization, the inner-side limiting fastener block presents a 7-shaped limiting fastener block connected with the inner side of the transverse rod, the corner limiting fastener block presents an oblique limiting fastener block snap-fitted in the corner position of the transverse rod, and the toggle latch block presents a Z-shaped toggle latch block conveniently operated.

According to above optimization, the guide snap includes a guide support block supported on a bottom surface of the rail body, a guide block for sliding on the transverse rod in the same horizontal direction as the upper rail, and clamping blocks snap-fitted or separated in the corner position at the rear end of the transverse rod as the guide block slides, wherein the clamping blocks are symmetrically arranged on a bottom surface at a right end of the guide support block from front to back, and the guide block is arranged on a bottom surface at a left end of the guide support block located in front of the clamping blocks.

According to above optimization, the clamping blocks extend to an outer side of the guide support block and form a snap-fitting position for being snap-fitted with or separated from the corner position of the transverse rod together with the bottom surface of the lower rail of the rail body, each end of the snap-fitting position is provided with a guide bevel which is convenient for the corner position at the rear end of the transverse rod to slide in; and
the left end of the guide support block is downward folded to form the guide block, and a guide groove which has a guide opening facing downward and is in sliding connection with the transverse rod is formed by the guide block and the clamping blocks.

The present invention has the advantages that: under the structure coordination between the guide snap and the front holder, the guide snap and the front holder are slidably mounted on the transverse rod of the connecting frame; when the guide snap and the front holder slip to the corner positions at the two ends of the transverse rod, there is only a need to lock the latch rod onto the front holder, to make the guide snap and the front holder be held at the two ends of the transverse rod respectively, so the mechanism has a locking function while achieving the effect of quickly assembling the slide rail on an oven liner, has a holding effect, preventing the slide rail from being disengaged from the connecting frame, improving the reliability of structural performance, ensuring the use effect of the slide rail, guaranteeing the use quality of an oven. When the slide rail is disassembled, there is only a need to toggle the latch rod, to disengage the latch rod from the front holder, so as to make the front holder and the guide snap slide off the transverse rod in sequence, thus it is achieved that the slide rail is quickly disassembled, thereby facilitating replacement and maintenance, improving the use quality of the slide rail, guaranteeing the use effect of the oven.

### Description of Drawings

Fig. 1 is a structural schematic diagram of the preferred embodiment of the present invention.
Fig. 2 is a structural schematic diagram of the preferred embodiment of the present invention (with rail body removed).
Fig. 3 is an installation diagram of the front holder and the latch rod in the preferred embodiment of the present invention (with rail body removed).
Fig. 4 is a structural diagram showing the installation of the front holder and the latch rod in the preferred embodiment of the present invention.
Fig. 5 is a main view showing the installation of the front holder and the latch rod in the preferred embodiment of the present invention.
Fig. 6 is an exploded view of the front holder and the latch rod in the preferred embodiment of the present invention.
Fig. 7 is an installation diagram of the guide snap in the preferred embodiment of the present invention.
Fig. 8 is a stereographic view of the guide snap in the preferred embodiment of the present invention.

### Detailed Description

The present invention will be further described as below with reference to the drawings.

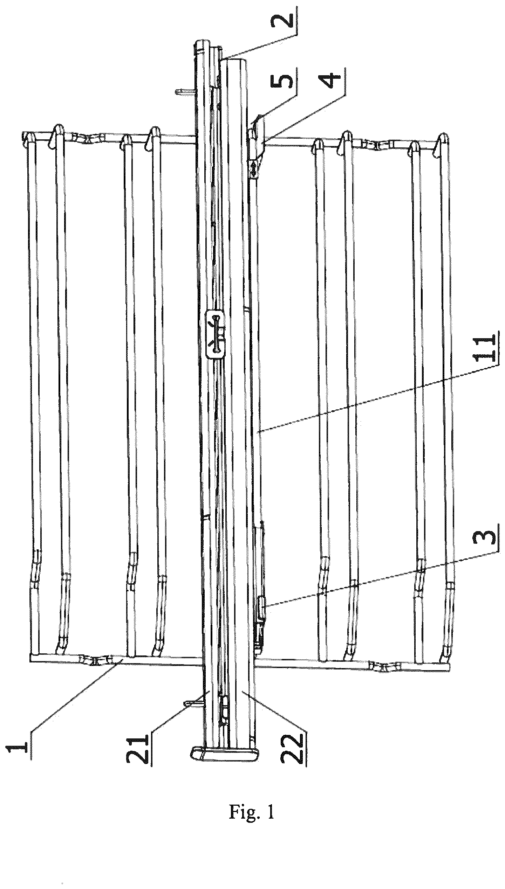

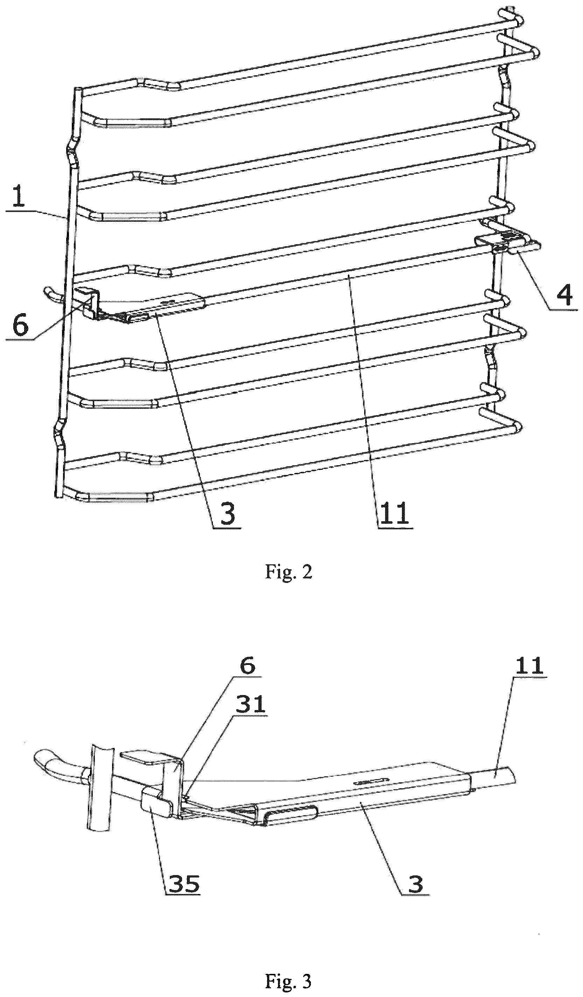

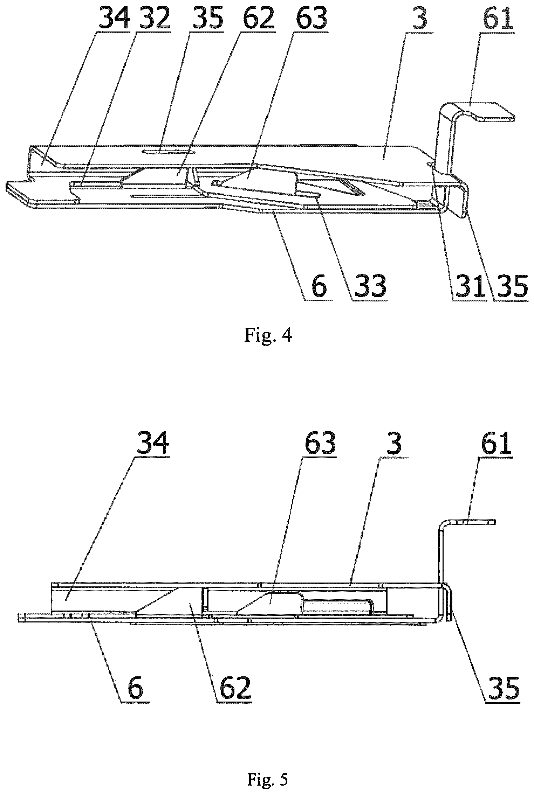

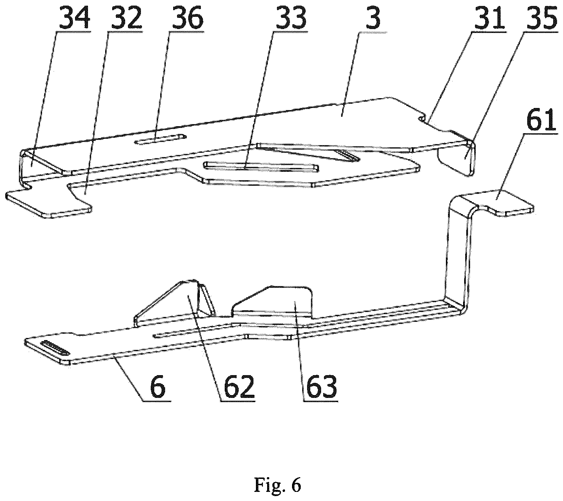

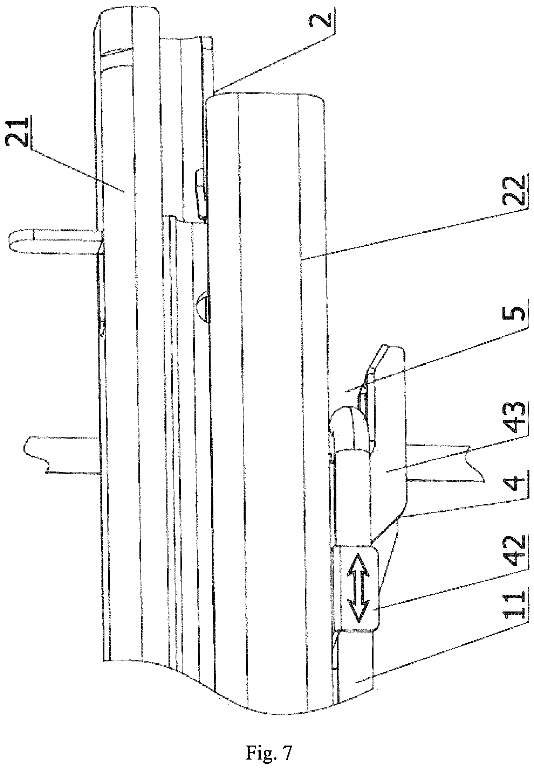

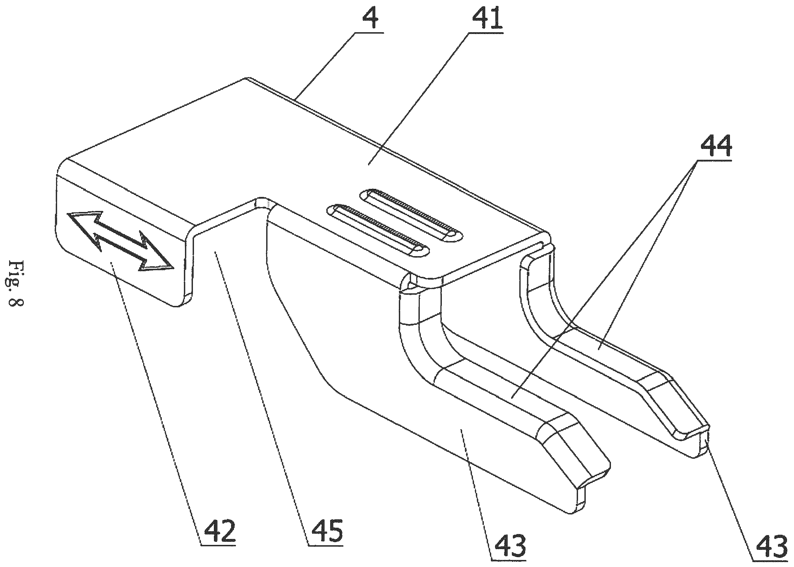

As shown in Fig. 1-Fig. 8, an oven slide rail handling mechanism with a locking function of the present invention, comprising a connecting frame 1 mounted on inner walls of both sides of an oven body, and a rail body 2, wherein an upper rail 21 of the rail body 2 is fitted to a baking tray, and a lower rail 22 of the rail body 2 is provided with a connecting component. The connecting component includes a guide snap 4 for slipping on a transverse rod 11 of the connecting frame 1 in the same horizontal direction as the upper rail 21, and a front holder 3, wherein the front holder 3 and the guide snap 4 are respectively mounted at a front end and a rear end of a bottom surface of the lower rail 22. Moreover, the guide snap 4 is provided with a snap-fitting position 5 for snap-fitting in a corner position at a rear end of the transverse rod 11, and the front holder 3 is provided with a latch rod 6 locked in a corner position at a front end of the transverse rod 11.

That is, when the slide rail is assembled, the guide snap 4 and the front holder 3 are slidably mounted on the transverse rod 11 of the connecting frame 1 in order. When the guide snap 4 and the front holder 3 slip to the corner positions at the two ends of the transverse rod 11, there is only a need to lock the latch rod 6 onto the front holder 3, to make the guide snap 4 and the front holder 3 be held at the two ends of the transverse rod 11 respectively, so the mechanism has a locking function while achieving the effect of quickly assembling the slide rail on an oven liner, has a good holding effect, preventing the slide rail from being disengaged from the connecting frame 1, improving the reliability of structural performance, ensuring the use effect of the slide rail, guaranteeing the use quality of an oven. When the slide rail is disassembled, there is only a need to toggle the latch rod 6, to disengage the latch rod 6 from the front holder 3, so as to make the front holder 3 and the guide snap 4 slide off the transverse rod 11 in sequence. Thus the slide rail is quickly disassembled, facilitating replacement and maintenance, improving the use quality of the slide rail, guaranteeing the use effect of an oven.

As shown in Fig. 1-Fig. 6, the front holder 3 comprises a U-shaped holding block slipping in the same horizontal direction as the guide snap 4. An upper end of the U-shaped holding block is provided with a latch fastener position 31, and a low end of the U-shaped holding block is provided with an open fastener position 32 and a connecting fastener position 33. The latch rod 6 is provided with a toggle latch block 61, an inner-side limiting fastener block 62 and a corner limiting fastener block 63. The toggle latch block 61 is adaptively fastened or separated in the latch fastener position 31, and the inner-side limiting fastener block 62 and the corner limiting fastener block 63 are fastened or separated in the open fastener position 32 and the connecting fastener position 33 respectively under the driving of the toggle latch block 61.

In practical application, a positioning end of the latch rod 6 is connected to a rear end of the front holder 3 in a positioning mode, and a swing end of the latch rod 6 is swung up and down by taking the positioning end thereof as a fixed point. Moreover, the swing end of the latch rod 6 is outward folded to form the inner-side limiting fastener block 62, the corner limiting fastener block 63 and the toggle latch block 61 respectively. Holding positions held at a straight bar part of the transverse rod 11 and the corner position are formed by the inner-side limiting fastener block 62 and the corner limiting fastener block 63 which are fastened in the open fastener position 32 and the connecting fastener position 33 and the U-shaped guide groove 34.

When the guide snap 4 and the front holder 3 slip to the corner positions at the two ends of the transverse rod 11, the toggle latch block 61 of the latch rod 6 is toggled, to make the toggle latch block 61 be fastened in the latch fastener position 31. Meanwhile, the inner-side limiting fastener block 62 and the corner limiting fastener block 63 are fastened in the open fastener position 32 and the connecting fastener position 33 respectively under the driving of the toggle latch block 61. At this time, holding positions formed by the inner-side limiting fastener block 62 and the corner limiting fastener block 63 and the U-shaped guide groove 34 are respectively held at a straight bar part of the transverse rod 11 and the corner position. In this way, the slide rail is quickly assembled, operation is facilitated, holding in multiple directions is achieved, having a good holding effect, having a locking function, improving the structural stability, improving the use quality of a product.

Then, the toggle latch block 61 of the toggled latch rod 6 is separated from the latch fastener position 31. Meanwhile, the inner-side limiting fastener block 62 and the corner limiting fastener block are separated from the open fastener position 32 and the connecting fastener position 33 respectively under the swing of the swing end of the latch rod 6, so that the front holder 3 and the guide snap 4 slide off the transverse rod 11 in sequence, thus the slide rail is quickly disassembled, operation is facilitated, facilitating maintenance and replacement, ensuring the use effect of the slide rail, guaranteeing the normal use of an oven.

Wherein, a middle part of the U-shaped holding block is provided with a U-shaped guide groove 34 with an opening provided toward an inner side of the transverse rod 11. The U-shaped guide groove 34 is in sliding connection with the transverse rod 11, a front end of the U-shaped guide groove 34 is provided with a limit stop 35 connected with an appropriate end of the corner position of the transverse rod 11, and the latch fastener position 31 is provided between the connection of the limit stop 35 and the upper end of the U-shaped holding block. The slip smoothness of assembly or disassembly is improved, operation is facilitated, a locking effect is improved, improving the structural stability, guaranteeing the use quality of a product.

In addition, the upper end of the U-shaped holding block is provided with a limiting fastener hole 36 corresponding to the inner-side limiting fastener block 62, and the inner-side limiting fastener block 62 is buckled on the limiting fastener hole 36 while being fastened in the open fastener position 32. Moreover, the inner-side limiting fastener block 62 presents a 7-shaped limiting fastener block connected with the inner side of the transverse rod 11, the corner limiting fastener block 63 presents an oblique limiting fastener block snap-fitted in the corner position of the transverse rod 11, and the toggle latch block 61 presents a Z-shaped toggle latch block conveniently operated. The reliability of structural performance is further improved, assembly or disassembly is facilitated, improving the use effect of a product.

As shown in Figs. 1, 2, 7 and 8, the clamping blocks 43 extend to an outer side of the guide support block 41 and form a snap-fitting position 5 for being snap-fitted with or separated from the corner position of the transverse rod 11 together with the bottom surface of the lower rail 22 of the rail body 2. Each end of the snap-fitting position 5 is provided with a guide bevel 44 which is convenient for the corner position at the rear end of the transverse rod 11 to slide in. Under the structure coordination between the clamping position 5 and the holding position, holding in multiple positions is achieved, the stability of assembly is improved; and under the action of the guide bevel 44, the support area is increased, the compressive strength is increased, the holding stability is further improved, ensuring the use effect of the slide rail, guaranteeing the normal use of an oven.

In addition, the left end of the guide support block 41 is downward folded to form a guide block 42, and a guide groove 45 which has a guide opening facing downward and is in sliding connection with the transverse rod 11 is formed by the guide block 42 and the clamping blocks 43. The guide snap 4 and the front holder 3 are slidably assembled on the connecting frame 1 in sequence, the traditional linear slide assembling mode is replaced, the smoothness of assembly or disassembly is improved, operation is facilitated, the phenomenon of wrong assembly is effectively avoided, guaranteeing the use quality of the slide rail.

The above specific embodiments are specific embodiments with good effects of the present invention. Any structure identical or similar to that of the oven slide rail handling mechanism with a locking function of present invention shall be covered in the protection scope of the present invention, as defined in the appended claims.

## Claims

1. An oven slide rail handling mechanism with a locking function, comprising a connecting frame (1) configured to be mounted on inner walls of both sides of an oven body, and a rail body (2), wherein an upper rail (21) of the rail body (2) is fitted to a baking tray, and a lower rail (22) of the rail body (2) is provided with a connecting component, **characterized in that**: the connecting component includes a guide snap (4) for slipping on a transverse rod (11) of the connecting frame (1) in the same horizontal direction as the upper rail (21), and a front holder (3), wherein the front holder (3) and the guide snap (4) are respectively mounted at a front end and a rear end of a bottom surface of the lower rail (22), the guide snap (4) is provided with a snap-fitting position (5) for snap-fitting in a corner position at a rear end of the transverse rod (11), and the front holder (3) is provided with a latch rod (6) locked in a corner position at a front end of the transverse rod (11), wherein the front holder (3) comprises a U-shaped holding block slipping in the same horizontal direction as the guide snap (4), an upper end of the U-shaped holding block is provided with a latch fastener position (31), wherein the latch rod (6) is provided with a toggle latch block (61), wherein the toggle latch block (61) is adaptively fastened or separated in the latch fastener position (31), **characterized in that**, a low end of the U-shaped holding block is provided with an open fastener position (32) and a connecting fastener position (33), **in that** the latch rod (6) is further provided with an inner-side limiting fastener block (62) and a corner limiting fastener block (63), and **in that** the inner-side limiting fastener block (62) and the corner limiting fastener block (63) are fastened or separated in the open fastener position (32) and the connecting fastener position (33) respectively under the driving of the toggle latch block (61).

2. The oven slide rail handling mechanism with a locking function according to claim 1, **characterized in that** a middle part of the U-shaped holding block is provided with a U-shaped guide groove (34) with an opening provided toward an inner side of the transverse rod (11), the U-shaped guide groove (34) is in sliding connection with the transverse rod (11), a front end of the U-shaped guide groove (34) is provided with a limit stop (35) connected with an appropriate end of the corner position of the transverse rod (11), and the latch fastener position (31) is provided between the connection of the limit stop (35) and the upper end of the U-shaped holding block.

3. The oven slide rail handling mechanism with a locking function according to claim 2, **characterized in that** holding positions held at a straight rod part of the transverse rod (11) and the corner position are formed by the inner-side limiting fastener block (62) and the corner limiting fastener block (63) which are fastened in the open fastener position (32) and the connecting fastener position (33) and the U-shaped guide groove (34).

4. The oven slide rail handling mechanism with a locking function according to claim 1, **characterized in that** the upper end of the U-shaped holding block is provided with a limiting fastener hole (36) corresponding to the inner-side limiting fastener block (62), and the inner-side limiting fastener block (62) is buckled on the limiting fastener hole (36) while being fastened in the open fastener position (32).

5. The oven slide rail handling mechanism with a locking function according to any one of claims 1-4, **characterized in that** a positioning end of the latch rod (6) is connected to a rear end of the front holder (3) in a positioning mode, a swing end of the latch rod (6) is swung up and down by taking the positioning end thereof as a fixed point, and the swing end of the latch rod (6) is outward folded to form the inner-side limiting fastener block (62), the corner limiting fastener block (63) and the toggle latch block (61) respectively.

6. The oven slide rail handling mechanism with a locking function according to claim 5, **characterized in that** the inner-side limiting fastener block (62) presents a 7-shaped limiting fastener block connected with the inner side of the transverse rod (11), the corner limiting fastener block (63) presents an oblique limiting fastener block snap-fitted in the corner position of the transverse rod (11), and the toggle latch block (61) presents a Z-shaped toggle latch block conveniently operated.

7. The oven slide rail handling mechanism with a locking function according to claim 1, **characterized in that** the guide snap (4) includes a guide support block (41) supported on a bottom surface of the rail body (2), a guide block (42) for sliding on the transverse rod (11) in the same horizontal direction as the upper rail (21), and clamping blocks (43) snap-fitted or separated in the corner position at the rear end of the transverse rod (11) as the guide block (42) slides, wherein the clamping blocks (43) are symmetrically arranged on a bottom surface at a right end of the guide support block (41) from front to back, and the guide block (42) is arranged on a bottom surface at a left end of the guide support block (41) located in front of the clamping blocks (43).

8. The oven slide rail handling mechanism with a locking function according to claim 7, **characterized in that** the clamping blocks (43) extend to an outer side of the guide support block (41) and form a snap-fitting position (5) for being snap-fitted with or separated from the corner position of the transverse rod (11) together with the bottom surface of the lower rail (22) of the rail body (2), each end of the snap-fitting position (5) is provided with a guide bevel (44) which is convenient for the corner position at the rear end of the transverse rod (11) to slide in; and
the left end of the guide support block (41) is downward folded to form the guide block (42), and a guide groove (45) which has a guide opening facing downward and is in sliding connection with the transverse rod (11) is formed by the guide block (42) and the clamping blocks (43).

## Patentansprüche

1. Ofenschienen-Handhabungsmechanismus mit einer Verriegelungsfunktion, der einen Verbindungsrahmen (1), der so konfiguriert ist, dass er an Innenwänden beider Seiten eines Ofenkörpers angebracht wird, und einen Schienenkörper (2) umfasst, wobei eine obere Schiene (21) des Schienenkörpers (2) an einem Backblech angebracht ist und eine untere Schiene (22) des Schienenkörpers (2) mit einer Verbindungskomponente versehen ist, **dadurch gekennzeichnet, dass**: die Verbindungskomponente eine Führungsraste (4) umfasst, die auf einer Querstange (11) des Verbindungsrahmens (1) in derselben horizontalen Richtung wie die obere Schiene (21) verschiebbar ist, sowie einen vorderen Halter (3), wobei der vordere Halter (3) und die Führungsraste (4) jeweils an einem vorderen Ende und einem hinteren Ende einer Unterseite der unteren Schiene (22) montiert sind, die Führungsraste (4) mit einer Einrastposition (5) versehen ist, die in einer Eckposition am hinteren Ende der Querstange (11) einrastet, der vordere Halter (3) mit einer Verriegelungsstange (6) versehen ist, die in einer Eckposition am vorderen Ende der Querstange (11) verriegelt ist, Der vordere Halter (3) umfasst: einen U-förmigen Halteblock, der in derselben horizontalen Richtung wie die Führungsraste (4) verschiebbar ist ein oberes Ende des U-förmigen Halteblocks ist mit einer Verriegelungsposition (31) versehen, in der die Verriegelungsstange (6) mit einem Schwenkriegelblock (61) versehen ist, Der Schwenkriegelblock (61) ist anpassungsfähig entweder in der Verriegelungsposition (31) befestigt oder gelöst, **dadurch gekennzeichnet, dass** ein unteres Ende des U-förmigen Halteblocks mit einer offenen Befestigungsposition (32) und einer Verbindungsbefestigungsposition (33) versehen ist, die Verriegelungsstange (6) ferner mit einem innerseitigen Begrenzungsbefestigungsblock (62) und einem Eckbegrenzungsbefestigungsblock (63) versehen ist, der innerseitigen Begrenzungsbefestigungsblock (62) und der Eckbegrenzungsbefestigungsblock (63) jeweils in der offenen Befestigungsposition (32) und der Verbindungsbefestigungsposition (33) unter dem Antrieb des Schwenkriegelblocks (61) befestigt oder gelöst werden können.

2. Der Ofenschienen-Handhabungsmechanismus mit Verriegelungsfunktion nach Anspruch 1, **dadurch gekennzeichnet, dass** ein mittlerer Teil des U-förmigen Halteblocks mit einer U-förmigen Führungsnut (34) versehen ist, deren Öffnung zur Innenseite der Querstange (11) ausgerichtet ist, Die U-förmige Führungsnut (34) ist gleitend mit der Querstange (11) verbunden, ein vorderes Ende der U-förmigen Führungsnut (34) ist mit einem Begrenzungsanschlag (35) versehen, der mit einem geeigneten Ende der Eckposition der Querstange (11) verbunden ist, Die Verriegelungsposition (31) ist zwischen der Verbindung des Begrenzungsanschlags (35) und dem oberen Ende des U-förmigen Halteblocks angeordnet.

3. Der Ofenschienen-Handhabungsmechanismus mit Verriegelungsfunktion nach Anspruch 2, **dadurch gekennzeichnet, dass** Haltepositionen, die an einem geraden Stangenteil der Querstange (11) und an der Eckposition gehalten werden, durch den innerseitigen Begrenzungsbefestigungsblock (62) und den Eckbegrenzungsbefestigungsblock (63) gebildet werden, Diese sind in der offenen Befestigungsposition (32) und der Verbindungsbefestigungsposition (33) sowie in der U-förmigen Führungsnut (34) befestigt.

4. Der Ofenschienen-Handhabungsmechanismus mit Verriegelungsfunktion nach Anspruch 1, **dadurch gekennzeichnet, dass** das obere Ende des U-förmigen Halteblocks mit einer Begrenzungsbefestigungsöffnung (36) versehen ist, die dem innerseitigen Begrenzungsbefestigungsblock (62) entspricht, wobei der innerseitigen Begrenzungsbefestigungsblock (62) in der Begrenzungsbefestigungsöffnung (36) einrastet und gleichzeitig in der offenen Befestigungsposition (32) befestigt ist.

5. Der Ofenschienen-Handhabungsmechanismus mit Verriegelungsfunktion nach einem der Ansprüche 1 bis 4, **dadurch gekennzeichnet, dass** ein Positionierungsende der Verriegelungsstange (6) in einer Positionierungsweise mit einem hinteren Ende des vorderen Halters (3) verbunden ist, ein Schwenkende der Verriegelungsstange (6) unter Verwendung des Positionierungsendes als festen Punkt nach oben und unten schwenkt und das Schwenkende der Verriegelungsstange (6) nach außen gefaltet ist, um den innerseitigen Begrenzungsbefestigungsblock (62), den Eckbegrenzungsbefestigungsblock (63) und den Schwenkriegelblock (61) jeweils zu bilden.

6. Der Ofenschienen-Handhabungsmechanismus mit Verriegelungsfunktion nach Anspruch 5, **dadurch gekennzeichnet, dass** der innerseitigen Begrenzungsbefestigungsblock (62) einen 7-förmigen Begrenzungsbefestigungsblock darstellt, der mit der Innenseite der Querstange (11) verbunden ist, der Eckbegrenzungsbefestigungsblock (63) einen schrägen Begrenzungsbefestigungsblock darstellt, der in der Eckposition der Querstange (11) einrastet, und der Schwenkriegelblock (61) einen Z-förmigen Schwenkriegelblock darstellt, der eine einfache Bedienung ermöglicht.

7. Der Ofenschienen-Handhabungsmechanismus mit Verriegelungsfunktion nach Anspruch 1, **dadurch gekennzeichnet, dass** die Führungsraste (4) einen Führungsstützblock (41) umfasst, der auf einer Unterseite des Schienenkörpers (2) abgestützt ist, einen Führungsblock (42), der in derselben horizontalen Richtung wie die obere Schiene (21) auf der Querstange (11) gleitet, und Klemmblöcke (43), die beim Gleiten des Führungsblocks (42) in der Eckposition am hinteren Ende der Querstange (11) einrasten oder gelöst werden können, wobei die Klemmblöcke (43) symmetrisch auf einer Unterseite an einem rechten Ende des Führungsstützblocks (41) von vorne nach hinten angeordnet sind und der Führungsblock (42) auf einer Unterseite an einem linken Ende des Führungsstützblocks (41) vor den Klemmblöcken (43) angeordnet ist.

8. Der Ofenschienen-Handhabungsmechanismus mit Verriegelungsfunktion nach Anspruch 7, **dadurch gekennzeichnet, dass** die Klemmblöcke (43) sich zur Außenseite des Führungsstützblocks (41) erstrecken und zusammen mit der Unterseite der unteren Schiene (22) des Schienenkörpers (2) eine Einrastposition (5) bilden, die zum Einrasten oder Lösen an der Eckposition der Querstange (11) dient, Jedes Ende der Einrastposition (5) ist mit einer Führungsfase (44) versehen, die das Einschieben der Eckposition am hinteren Ende der Querstange (11) erleichtert,
Das linke Ende des Führungsstützblocks (41) ist nach unten gefaltet und bildet den Führungsblock (42), wobei eine Führungsnut (45) gebildet wird, die eine nach unten gerichtete Führungsöffnung aufweist und gleitend mit der Querstange (11) verbunden ist, Diese Führungsnut (45) wird durch den Führungsblock (42) und die Klemmblöcke (43) gebildet.

## Revendications

1. Un mécanisme de manutention de glissière de four avec fonction de verrouillage, comprenant un cadre de liaison (l) configuré pour être monté sur les parois intérieures des deux côtés d'un corps de four, et un corps de rail (2), dans lequel un rail supérieur (21) du corps de rail (2) est monté sur une plaque de cuisson, et un rail inférieur (22) du corps de rail (2) est pourvu d'un composant de liaison, **caractérisé en ce que** : l'élément de liaison comprend un encliquetage de guidage (4) pour glisser sur une tige transversale (11) du cadre de liaison (1) dans la même direction horizontale que le rail supérieur (21), et un support avant (3), dans lequel le support avant (3) et le encliquetage de guidage (4) sont respectivement montés à une extrémité avant et à une extrémité arrière d'une surface inférieure du rail inférieur (22), le encliquetage de guidage (4) est pourvu d'une position d'encliquetage (5) pour un encliquetage en position d'angle à une extrémité arrière de la tige transversale (11), et le support avant (3) est pourvu d'une tige de verrouillage (6) verrouillée en position d'angle à une extrémité avant de la tige transversale (11), dans laquelle le support avant (3) comprend un bloc de maintien en forme de U glissant dans la même direction horizontale que le encliquetage de guidage (4), une extrémité supérieure du bloc de maintien en forme de U est pourvue d'une position de fixation de verrou (31), dans laquelle la tige de verrouillage (6) est pourvue d'un bloc de verrouillage à genouillère (61), dans laquelle le bloc de verrouillage à genouillère (61) est fixé ou séparé de manière adaptative dans la position de fixation de verrou (31), **caractérisé en ce que**, une extrémité inférieure du bloc de maintien en forme de U est pourvue d'une position de fixation ouverte (32) et d'une position de fixation de liaison (33), **en ce que** la tige de verrouillage (6) est en outre pourvue d'un bloc de fixation de côté intérieur (62) et d'un bloc de fixation de limitation d'angle (63), et **en ce que** le bloc de fixation de limitation de côté intérieur (62) et le bloc de fixation de limitation d'angle (63) sont fixés ou séparés en position de fixation ouverte (32) et en position de fixation de liaison (33) respectivement sous l'entraînement du bloc de verrouillage à genouillère (61).

2. Le mécanisme de manipulation de glissière de four avec fonction de verrouillage selon la revendication l, **caractérisé en ce qu'**une partie centrale du bloc de maintien en forme de U est pourvue d'une rainure de guidage en forme de U (34) avec une ouverture prévue vers un côté intérieur de la tige transversale (11), la rainure de guidage en forme de U (34) est en liaison coulissante avec la tige transversale (11), une extrémité avant de la rainure de guidage en forme de U (34) est pourvue d'une butée de fin de course (35) reliée à une extrémité appropriée de la position d'angle de la tige transversale (11), et la position de la fixation du verrou (31) est prévue entre la connexion de la butée de fin de course (35) et l'extrémité supérieure du bloc de maintien en forme de U.

3. Le mécanisme de manutention de glissière de four avec fonction de verrouillage selon la revendication 2, **caractérisé en ce que** les positions de maintien maintenues à une tige droite partie de la tige transversale (11) et la position d'angle sont formées par le bloc de fixation de limitation de côté intérieur (62) et le bloc de fixation de limitation d'angle (63) qui sont fixés en position de fixation ouverte (32) et la position de fixation de liaison (33) et la rainure de guidage en forme de U (34).

4. Le mécanisme de manutention de glissière de four avec fonction de verrouillage selon la revendication 1, **caractérisé en ce que** l'extrémité supérieure du bloc de fixation en forme de U est pourvue d'un trou de fixation de limitation (36) correspondant au bloc de fixation de limitation de côté intérieur (62), et que le bloc de fixation de limitation de côté intérieur (62) est déformé sur le trou de fixation de limitation (36) tout en étant fixé en position de fixation ouverte (32).

5. Le mécanisme de manipulation de glissière de four avec fonction de verrouillage selon l'une quelconque des revendications 1 à 4, **caractérisé en ce qu'**une extrémité de positionnement de la tige de verrouillage (6) est reliée à une extrémité arrière du support avant (3) dans un mode de positionnement, une extrémité pivotante de la tige de verrouillage (6) est pivotée vers le haut et vers le bas en prenant l'extrémité de positionnement de celle-ci comme point fixe, et l'extrémité pivotante de la tige de verrouillage (6) est pliée vers l'extérieur pour former respectivement le bloc de fixation de côté intérieur (62), le bloc de fixation de limitation d'angle (63) et le bloc de verrouillage à genouillère (61).

6. Le mécanisme de manutention de glissière de four avec fonction de verrouillage selon la revendication 5, **caractérisé en ce que** le bloc de fixation de limitation de côté intérieur (62) présente un bloc de fixation de limitation en forme de 7 relié à la face intérieure de la tige transversale (11), le bloc de fixation de limitation d'angle (63) présente un bloc de fixation de limitation oblique monté par encliquetage dans la position d'angle de la tige transversale (11), et le bloc de pêne à genouillère (61) présente un bloc de pêne à genouillère en forme de Z commodément actionné.

7. Le mécanisme de manipulation de glissière de four avec fonction de verrouillage selon la revendication 1, **caractérisé en ce que** le dispositif d'encliquetage de guidage (4) comprend un bloc de support de guidage (41) supporté sur une surface inférieure du corps de rail (2), un bloc de guidage (42) destinné à coulisser sur la tige transversale (11) dans la même direction horizontale que le rail supérieur (21), et des blocs de serrage (43) encliquetés ou séparés dans la position d'angle à l'extrémité arrière de la tige transversale (11) lorsque le bloc de guidage (42) coulisse, les blocs de serrage (43) étant disposés symétriquement sur une surface inférieure à une extrémité droite du bloc de support de guidage (41) d'avant en arriére, et le bloc de guidage (42) étant disposé sur une surface inférieure à une extrémité gauche du bloc de support de guidage (41) située devant les blocs de serrage (43).

8. Le mécanisme de manipulation de glissière de four avec fonction de verrouillage selon la revendication 7, **caractérisé en ce que** les blocs de serrage (43) s'étendent jusqu'à un côté extérieur du bloc de support de guidage (41) et forment la position d'encliquetage (5) destinée à être encliquetée avec ou séparée de la position d'angle de la tige transversale (11) conjointement avec la surface inférieure du rail inférieur (22) du corps de rail (2), chaque extrémité de la position d'encliquetage (5) est pourvue d'un biseau de guidage (44) qui est pratique pour que la position d'angle à l'extrémité arrière de la tige transversale (11) puisse coulisser ; et
l'extrémité gauche du bloc de support de guidage (41) est pliée vers le bas pour former le bloc de guidage (42), et une rainure de guidage (45) qui a une ouverture de guidage tournée vers le bas et est en liaison coulissante avec la tige transversale (11) est formée par le bloc de guidage (42) et les blocs de serrage (43).
